# EUROPÄISCHE PATENTANMELDUNG

(11) **EP 2 236 581 A2**
(43) Veröffentlichungstag der Anmeldung: **06.10.2010**
(21) Anmeldenummer: 10003708.4
(22) Anmeldetag: 06.04.2010
(51) Int. Cl.: C10B 47/44, C10B 53/02, F02C 1/04, F02C 3/28

(54) **Vorrichtung und Verfahren zur thermochemischen Umwandlung von Holz**

(30) Priorität: 02.04.2009 DE 102009015531
(71) Anmelder: Prof. Dr. Erich Schürmann, 48324 Sendenhorst (DE)
(72) Erfinder: Prof. Dr. Erich Schürmann, 48324 Sendenhorst (DE)
(74) Vertreter: Ostriga, Sonnet, Wirths & Roche

(57) **Zusammenfassung**

Dargestellt und beschrieben ist unter anderem eine Vorrichtung zur thermochemischen Umwandlung von Holz, mit mindestens einem kontinuierlich arbeitenden Bewegtbettreaktor, wie einem doppelwandigen Schneckenreaktor (11) od. dgl., in dem das über eine Einfüllöffnung (13) in den Schneckenreaktor (11) gelangte Holz unter Luftabschluss erwärmt, getrocknet und pyrolysiert wird, wobei der Schneckenreaktor (11) in Förderrichtung (x) vorne eine Öffnung (15) zur Entfernung des Pyrolysegases und eine Öffnung (14) zur Entfernung der Holzkohle aufweist, wobei der Schneckenreaktor mit (11) einem Ofen (18) zur im Wesentlichen vollständigen Verbrennung des Pyrolysegases verbunden ist, wobei der Ofen (18) mit einem Abgas-Luft-Wärmetauscher (20) versehen ist und wobei dem Abgas-Luft-Wärmetauscher (20) eine Einrichtung (T) zur Erzeugung von elektrischem Strom nachgeordnet ist.

Die Besonderheit besteht darin, dass die Einrichtung zur Erzeugung von elektrischem Strom eine Heißluftturbine (T) umfasst, dass der Abgas-Luft-Wärmetauscher (20) mit der Heißluftturbine (T) verbunden ist, um die dem Abgas-Luft-Wärmetauscher (20) zugeführte und von dem Abgas-Luft-Wärmetauscher (20) erwärmte Luft zu der Heißluftturbine (T) zu leiten und dass die Heißluftturbine (T) mit dem Ofen (19) verbunden ist, um zumindest einen Teil der Abluft der Heißluftturbine (T) einer Brennkammer (17) des Ofens (18) zuzuführen.

## Beschreibung

Die Erfindung betrifft zunächst eine Vorrichtung zur thermochemischen Umwandlung von Holz, mit mindestens einem kontinuierlich arbeitenden Bewegtbettreaktor, wie einem doppelwandigen Schneckenreaktor od. dgl., in dem das über eine Einfüllöffnung in den Schneckenreaktor gelangte Holz unter Luftabschluss erwärmt, getrocknet und pyrolysiert wird.

Aus dem druckschriftlich nicht belegbaren Stand der Technik sind derartige Anlagen allgemein bekannt, wobei die Qualität der von Reaktoren erzeugten Brenngase den hohen Anforderungen der Verbrennungsmotoren, insbesondere der Kolbenmotoren nicht genügt.

Hintergrund ist der Umstand, dass bei der thermochemischen Umwandlung je nach Reaktorart unterschiedlich, aber stets zu große Mengen an Störstoffen im Brenngas entstehen, bei denen es sich im Wesentlichen um Partikel und Teere handelt. Aus diesem Grunde beziehen sich die derzeitigen Forschungen und Entwicklungen darauf, Mehrstufenreaktoren und aufwändige Gasreinigungsverfahren zu schaffen, mit denen die geforderten Grenzwerte eingehalten werden können. So benötigt man für die motorische Verwertung des Gases stets eine Teer- und Kondensatabscheidung, eine Staubabscheidung und eine Gaskühlung, damit insbesondere das Zusammenspiel von Kondensat und Staub nicht zwangsläufig zu Verstopfungen führt. Dies wirkt sich jedoch negativ auf die Wirtschaftlichkeit entsprechender Anlagen aus.

Ein weiterer Nachteil, der aus dem Stand der Technik bekannten konventionellen Vorrichtung zur thermochemischen Umwandlung ist die wirtschaftliche Notwendigkeit der Vermarktung der Abwärme aus dem Prozess, da die Vermarktung der Abwärme sehr häufig den Standort derartiger Anlagen bestimmt und nicht das Vorhandensein von Holz. Auch entstehen wirtschaftliche Probleme dadurch, dass die Vermarktung von Wärme aufgrund ihrer mangelnden Speicherfähigkeit saisonalen Schwankungen unterliegt.

Die Aufgabe der Erfindung besteht deshalb darin, eine neue Vorrichtung zur thermochemischen Umwandlung von Holz zu schaffen, die eine größere Wirtschaftlichkeit hat.

Die Lösung der Aufgabe ergibt sich aus den Merkmalen des Anspruchs 1, insbesondere den kennzeichnenden Merkmalen, wonach der Schneckenreaktor in Förderrichtung vorne eine Öffnung zur Entfernung des Pyrolysegases und eine Öffnung zur Entfernung der Holzkohle aufweist, und dass der Schneckenreaktor mit einem Ofen zur im Wesentlichen vollständigen Verbrennung des Pyrolysegases verbunden ist, der mit einem Wärmetauscher versehen ist und dass dem Wärmetauscher eine Einrichtung zur Erzeugung von elektrischem Strom nachgeordnet ist.

Die erfindungsgemäße Vorrichtung weist den großen Vorteil auf, dass aufgrund der im Wesentlichen vollständigen Verbrennung des Pyrolysegases und des Verzichts auf Abgasreinigung ein einfacher Aufbau und damit auch ein störungsfreier wirtschaftlicher Betrieb gesichert ist. Hinzu kommt der Vorteil, dass auf relativ einfache Weise die vorgeschriebenen Abgaswerte eingehalten werden können.

Auch ermöglicht die erfindungsgemäße Vorrichtung eine optimale Wahl des Standortes derartiger Anlagen nach den Gesichtspunkten der optimalen Holzlogistik. Dies bedeutet, dass derartige Anlagen nicht direkt neben einem Abnehmer der Abwärme, sondern nahe an dem Rohstoff Holz angeordnet werden können, wobei statt der schwierig zu vermarktenden Wärme ein hochwertiger speicherfähiger Brennstoff in Form von Holzkohle entsteht, der an jedem Ort und zu jeder Zeit vermarktet werden kann. In diesem Zusammenhang ist auch von Vorteil, dass nur 25 % der eingesetzten Holzmasse in Holzkohle umgewandelt wird, wobei diese Holzkohle jedoch mehr als 50 % der eingesetzten Holzenergie speichert.

Auf vorteilhafte Weise wird darüber hinaus knapp 50 % der eingesetzten Holzenergie in Pyrolysegas gespeichert, welches in Folge der anschließenden Verbrennung zunächst in Wärme umgewandelt und dann letztendlich als elektrischer Strom gespeichert oder zu einem Verbraucher geleitet werden kann.

Bei einer vorteilhaften Ausführungsform der Erfindung ist der Ofen über eine Abgasleitung mit dem doppelwandigen Schneckenreaktor zum Zwecke der Erwärmung des Letzteren verbunden und der Ofen weist einen Abgas-Luft-Wärmetauscher auf, der Teil einer offenen Heißluftturbine darstellt, welche einen Stromgenerator antreibt. Durch diese Anordnung der Vorrichtung wird die bei der Verbrennung des Pyrolysegases entstehende Wärme zum großen Teil zum einen zur Beheizung des Schneckenreaktors und zum anderen zur Erzeugung von Strom genutzt.

Bei einer weiteren vorteilhaften Ausführungsform ist der Abgas-Luft-Wärmetauscher mit einem Verdichter verbunden, der die komprimierte Umgebungsluft erzeugt, wobei auch die Möglichkeit besteht, dass die vom Verdichter erzeugte, komprimierte Umgebungsluft in einem, die Abluft der offenen Heißluftturbine aufnehmenden Luft-Luft-Wärmetauscher, vor Eintritt in den Ofen vorerwärmt wird.

Eine bevorzugte Ausführungsform der Erfindung ist des Weiteren durch zwei in Reihe geschaltete Schneckenreaktoren gekennzeichnet, von dem der erste nur für Holztrocknung und der zweite für die Pyrolyse vorgesehen ist. Bei dieser Vorrichtung ist auf vorteilhafte Weise sichergestellt, dass der im ersten Reaktor entstehende Wasserdampf nicht in den zweiten Reaktor gelangen kann.

Grundsätzlich ist es möglich, den Schneckenreaktor so auszugestalten, dass die Öffnung zur Entfernung des Pyrolysegases an der Oberseite in Förderrichtung vorne und die Öffnung zur Entfernung der Holzkohle an der Unterseite in Förderrichtung vorne angeordnet ist. Dadurch wird auf vorteilhafte Weise eine klare automatische Trennung der bei der Pyrolyse entstehenden Produkte, nämlich Holzkohle und Pyrolysegas, erreicht.

Darüber hinaus kann auf vorteilhafte Weise an der Öffnung zur Entfernung der Holzkohle ein luftdichter Behälter angeordnet sein, der eine Kühlvorrichtung aufweist. Dies ist vorteilhaft, da die mit hoher Temperatur aus dem Schneckenreaktor fallende Holzkohle ansonsten in eine unkontrollierte Verbrennung übergehen würde.

Weitere Vorteile der Erfindung ergeben sich aus den nachfolgenden Ansprüchen 8 und 9.

Des Weiteren betrifft die Erfindung auch ein Verfahren zur thermochemischen Umwandlung von Holz, einen getrennten Abzug von Holzkohle und Pyrolysegas aus dem Reaktor und eine im Wesentlichen vollständige Verbrennung des Pyrolysegases zur Erzeugung von Wärme.

Ausgehend von dem oben dargelegten Stand der Technik sowie auch der ebenfalls dort angegebenen Aufgabe besteht die Lösung in den Merkmalen des Anspruchs 10, insbesondere in den Merkmalen des Kennzeichenteils, also dem getrennten Abzug von Holzkohle und Pyrolysegas aus dem Reaktor und eine im Wesentlichen vollständige Verbrennung des Pyrolysegases zur Erzeugung von Wärme.

Zusammenfassend bestehen die wesentlichen Vorteile in diesem Verfahren darin, dass einerseits eine aufwändige Reinigung des Pyrolysegases entfällt und andererseits ein großer Teil der eingesetzten Energie in der örtlich und zeitlich flexibel vermarktbaren Holzkohle gespeichert wird.

Bei einer vorteilhaften Ausführungsform des erfindungsgemäßen Verfahrens wird darüber hinaus die anfallende Wärme zur Stromerzeugung und zur Beheizung des Pyrolysereaktors genutzt. Eine derartige Ausgestaltung des erfindungsgemäßen Verfahrens erhöht auf vorteilhafte Weise den Wirkungsgrad.

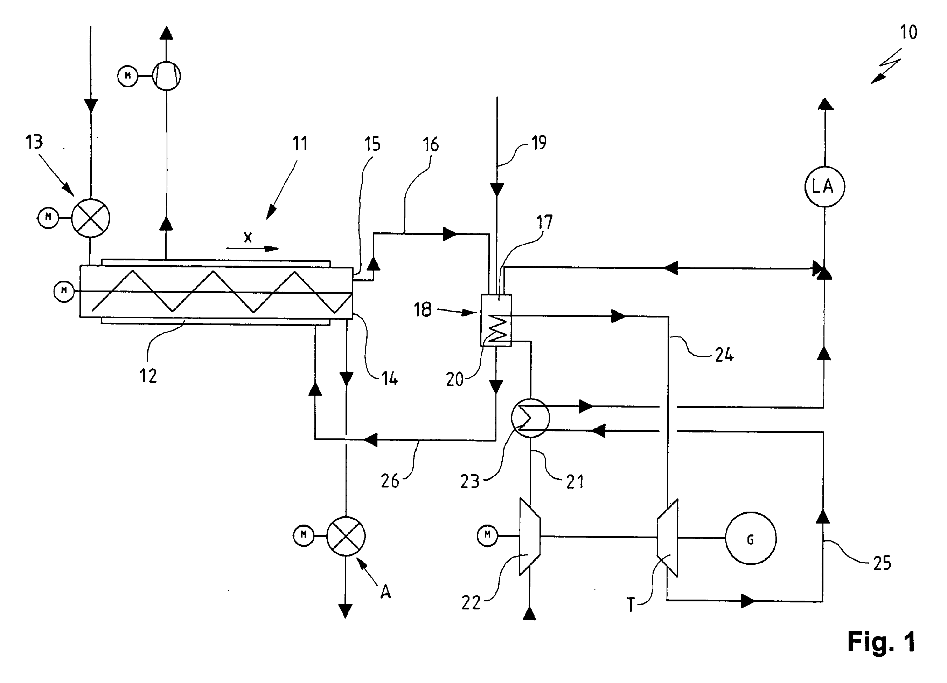

Weitere Vorteile der Erfindung ergeben sich aus der nachfolgenden Beschreibung eines Ausführungsbeispieles gemäß der beigefügten Figur 1.

In Fig. 1 ist eine Vorrichtung zur thermochemischen Umwandlung von Holz insgesamt mit der Bezugsziffer 10 bezeichnet.

Eine derartige Vorrichtung 10 weist zunächst einen Schneckenreaktor 11 auf, der mit einem Doppelmantel 12 versehen ist, welcher auf nachfolgend beschriebene Weise mit Abgas beheizt wird. Der Schneckenreaktor 11 wird über eine luftdicht verschließbare Einfüllöffnung 13, die über einen Motor M angetrieben wird, mit Holz, insbesondere Holzhackschnitzel, beschickt. Der mittels des Doppelmantels 12 auf ca. 500°C beheizte Schneckenreaktor 11 wird ebenfalls über einen Motor M angetrieben und weist in Förderrichtung x an der Unterseite eine Öffnung 14 auf, über die die Holzkohle mittels einer Abzugeinrichtung A einschließlich Motor M aus dem Schneckenreaktor 11 entfernt wird. Auf nicht dargestellte Weise fällt die Holzkohle zunächst in einen luftdicht verschlossenen Behälter, der eine Kühlvorrichtung aufweist.

Das in dem Schneckenreaktor 11 entstehende Pyrolysegas wird des Weiteren durch eine in Förderrichtung x vorne an der Oberseite des Schneckenreaktors angeordnete Öffnung 15 und eine Leitung 16 in eine Brennkammer 17 eines Ofens 18 eingeleitet. Für die Inbetriebsetzung der Vorrichtung 10 wird die Brennkammer 17 des Ofens 18 zunächst über eine Leitung 19 mit Flüssiggas oder Erdgas befeuert.

In der Brennkammer 17 des Ofens 18 ist ein Abgas-Luft-Wärmetauscher 20 angeordnet. Der Abgas-Luft-Wärmetauscher 20, wird über eine Leitung 21 und einen Verdichter 22, der ebenfalls über einen Motor M angetrieben wird, mit auf 3 bar komprimierte Umgebungsluft versorgt. Da zwischen dem Verdichter 22 und dem Abgas-Luft-Wärmetauscher 20 der Brennkammer 17 zusätzlich ein Luft-Luft-Wärmetauscher 23 angeordnet ist, tritt die vom Verdichter 22 komprimierte Luft mit einer Eingangstemperatur von 400°C in den Abgas-Luft-Wärmetauscher 20 ein. Dort wird diese Luft auf ca. 900°C erwärmt bevor sie über eine Leitung 24 einer offenen Heißgasturbine T zugeführt und auf Umgebungsdruck entspannt wird, wobei sie letztlich zum Zwecke der Stromerzeugung einen Generator G antreibt.

Die Abluft der offenen Heißgasturbine T wird über eine Leitung 25 dem Luft-Luft-Wärmetauscher 23 zugeführt, der die vom Verdichter 22 komprimierte Umgebungsluft vor dem Abgas-Luft-Wärmetauscher 20 auf 400°C erwärmt.

Letztlich wird die restliche Abwärme aus der offenen Heißgasturbine T über eine Leitung 25 wiederum der Brennkammer 17 zugeführt, wobei überschüssige Luftmengen über einen Auslass LA an die Umgebung abgegeben werden können.

Wesentlich ist in dem Zusammenhang auch, dass ein Teil der bei der Verbrennung des Pyrolysegases in der Brennkammer 17 erzeugten Wärme über eine Leitung 26 der Doppelmantel 12 des Schneckenreaktors 11 zugeführt wird, wodurch eine ausreichende Beheizung des Schneckenreaktors 11 - mit der Ausnahme in der Phase der Inbetriebnahme - ohne Einsatz von Fremdenergie, realisiert wird.

Letztlich ist der Doppelmantel 12 mit einem Abgasgebläse AG verbunden, mit dem in der gesamten Vorrichtung 10 ein geringer Unterdruck erzeugt werden kann.

## Patentansprüche

1. Vorrichtung zur thermochemischen Umwandlung von Holz, mit mindestens einem kontinuierlich arbeitenden Bewegtbettreaktor, wie einem doppelwandigen Schneckenreaktor (11) od. dgl., in dem das über eine Einfüllöffnung (13) in den Schneckenreaktor (11) gelangte Holz unter Luftabschluss erwärmt, getrocknet und pyrolysiert wird, wobei der Schneckenreaktor (11) in Förderrichtung (x) vorne eine Öffnung (15) zur Entfernung des Pyrolysegases und eine Öffnung (14) zur Entfernung der Holzkohle aufweist, wobei der Schneckenreaktor mit (11) einem Ofen (18) zur im Wesentlichen vollständigen Verbrennung des Pyrolysegases verbunden ist, wobei der Ofen (18) mit einem Abgas-Luft-Wärmetauscher (20) versehen ist und wobei dem Abgas-Luft-Wärmetauscher (20) eine Einrichtung (T) zur Erzeugung von elektrischem Strom nachgeordnet ist, **dadurch gekennzeichnet, dass** die Einrichtung zur Erzeugung von elektrischem Strom eine Heißluftturbine (T) umfasst, dass der Abgas-Luft-Wärmetauscher (20) mit der Heißluftturbine (T) verbunden ist, um die dem Abgas-Luft-Wärmetauscher (20) zugeführte und von dem Abgas-Luft-Wärmetauscher (20) erwärmte Luft zu der Heißluftturbine (T) zu leiten und dass die Heißluftturbine (T) mit dem Ofen (19) verbunden ist, um zumindest einen Teil der Abluft der Heißluftturbine (T) einer Brennkammer (17) des Ofens (18) zuzuführen.

2. Vorrichtung nach Anspruch 1, **dadurch gekennzeichnet, dass** der Ofen (18) über eine Abgasleitung (26) mit dem doppelwandigen Schneckenreaktor (11) zum Zwecke der Erwärmung des Letzteren verbunden ist und dass der Ofen (18) einen Abgas-Luft-Wärmetauscher (20) aufweist, der Teil einer offenen Heißluftturbine (T) darstellt, welche einen Stromgenerator (G) antreibt.

3. Vorrichtung nach Anspruch 1 oder 2, **dadurch gekennzeichnet, dass** der Abgas-Luft-Wärmetauscher (20) mit einem Verdichter (22) verbunden ist, der komprimierte Umgebungsluft erzeugt.

4. Vorrichtung nach Anspruch 3, **dadurch gekennzeichnet, dass** die vom Verdichter (22) erzeugte, komprimierte Umgebungsluft in einem, die Abluft der offenen Heißluftturbine (T) aufnehmenden Luft-Luft-Wärmetauscher (23), vor dem Eintritt in den Abgas-Luft-Wärmetauscher (20) des Ofens (18) vorerwärmt wird.

5. Vorrichtung nach einem der vorangehenden Ansprüche, **gekennzeichnet durch** zwei in Reihe geschaltete Schneckenreaktoren (11), von denen der erste nur für die Holztrocknung und der zweite für die Pyrolyse vorgesehen ist.

6. Vorrichtung nach einem der vorangehenden Ansprüche, **dadurch gekennzeichnet, dass** die Öffnung (15) zur Entfernung des Pyrolysegases an der Oberseite des Schneckenreaktors (11) in Förderrichtung (x) vorne und die Öffnung (14) zur Entfernung der Holzkohle an der Unterseite in Förderrichtung (x) vorne angeordnet ist.

7. Vorrichtung nach einem der vorangehenden Ansprüche, **dadurch gekennzeichnet, dass** an der Öffnung (14) zur Entfernung der Holzkohle ein luftdichter Behälter angeordnet ist, der eine Kühlvorrichtung aufweist.

8. Vorrichtung nach einem der vorangehenden Ansprüche, **dadurch gekennzeichnet, dass** der Schneckenreaktor (11) ein Abgasgebläse (AG) aufweist, mit dem in der Vorrichtung ein geringer Unterdruck erzeugt wird.

9. Vorrichtung nach einem der vorangehenden Ansprüche, **dadurch gekennzeichnet, dass** der Ofen (18) mit Flüssiggas, Erdgas od. dgl. betrieben werden kann.

10. Verfahren zur thermochemischen Umwandlung von Holz, mit mindestens einem kontinuierlich arbeitenden Bewegtbettreaktor (11), in dem das über eine Einfüllöffnung (13) in den Reaktor (11) gelangte Holz unter Luftabschluss erwärmt, getrocknet und pyrolysiert wird, wobei Holzkohle und Pyrolysegas getrennt aus dem Reaktor abgezogen werden und das Pyrolysegas in einer Brennkammer (17) eines Ofens (18) zur Erzeugung von Wärme im Wesentlichen vollständig verbrannt wird, **gekennzeichnet durch**, eine Zuleitung von Luft zu einem dem Ofen (18) zugeordneten Abgas-Luft-Wärmetauscher (20), eine Erwärmung der Luft in dem Abgas-Luft-Wärmetauscher (20), eine Zuleitung der Abluft des Abgas-Luft-Wärmetauschers (20) zu einer Heißgasturbine (T), und eine Zuleitung wenigstens eines Teils der Abluft der Heißgasturbine (T) zu der Brennkammer (17).

11. Verfahren nach Anspruch 10, **dadurch gekennzeichnet, dass** die anfallende Wärme zur Stromerzeugung und zur Beheizung des Pyrolysereaktors genutzt wird.
